# FASCICULE DE BREVET EUROPEEN

(11) **EP 3 072 811 B1**
(45) Date de publication et mention de la délivrance du brevet: **06.06.2018**
(21) Numéro de dépôt: 16157421.5
(22) Date de dépôt: 25.02.2016
(51) Int. Cl.: B64C 25/52, B64C 25/60

(54) **AERONEF ET TRAIN D'ATTERRISSAGE MUNI D'AU MOINS UNE PAIRE D'AMORTISSEURS, ET PROCEDE MIS EN OEUVRE PAR LEDIT TRAIN**
LUFTFAHRZEUG UND FAHRWERK, DAS MIT MINDESTENS EINEM PAAR STOSSDÄMPFER AUSGESTATTET IST, UND VERFAHREN ZUR UMSETZUNG DIESES FAHRWERKS
AN AIRCRAFT AND LANDING GEAR PROVIDED WITH AT LEAST ONE PAIR OF SHOCK ABSORBERS, AND A METHOD PERFORMED BY SAID LANDING GEAR

(30) Priorité: 25.03.2015 FR 1500597
(43) Date de publication de la demande: 28.09.2016
(73) Titulaire: Airbus Helicopters, 13725 Marignane Cedex (FR)
(72) Inventeur: PRUD'HOMME-LACROIX, Pierre, 13127 Vitrolles (FR); GARCIN, Patrice, 13820 Ensuès (FR)
(74) Mandataire: GPI & Associés

(56) Documents cités:
- DE-B- 1 104 833
- FR-A1- 2 761 745
- US-A- 3 173 632
- US-A- 4 519 559

## Description

La présente invention concerne un train d'atterrissage muni d'au moins une paire d'amortisseurs, et un aéronef muni d'un tel train d'atterrissage. De plus, l'invention concerne le procédé mis en oeuvre par ce train d'atterrissage

Plus précisément, l'invention se situe dans le domaine technique des trains d'atterrissage à patins de giravion.

Classiquement, un giravion comporte un train d'atterrissage sur lequel le giravion repose au sol. Plus particulièrement, parmi les trains d'atterrissage, on distingue les trains d'atterrissage dénommés « train d'atterrissage à patins » munis d'un premier patin longitudinal d'appui et d'un deuxième patin longitudinal d'appui. Les patins sont destinés à être en contact avec le sol et disposés de part et d'autre d'un plan antéropostérieur vertical du giravion. Le premier patin longitudinal d'appui et le deuxième patin longitudinal définissent conjointement un plan dénommé « plan d'appui » par commodité.

L'aéronef repose alors sur le sol via deux patins allongés.

Pour relier chaque patin au fuselage de l'aéronef, le train d'atterrissage à patins peut être muni d'une première traverse transversale et d'une deuxième traverse transversale reliant chacune le premier patin et le deuxième patin au fuselage.

La première traverse est dite « traverse avant » puisque cette première traverse relie au fuselage les zones situées à l'avant du premier patin longitudinal et du deuxième patin longitudinal. A l'inverse, la deuxième traverse est dite «traverse arrière » dans la mesure où cette deuxième traverse relie au fuselage les zones situées à l'arrière du premier patin longitudinal et du deuxième patin longitudinal.

Le train d'atterrissage est alors fixé à l'aéronef par ses traverses avant et arrière. Une traverse comprend au moins un tube orienté transversalement.

Au moins une traverse peut être continue en s'étendant continûment du premier patin au deuxième patin. De manière alternative, au moins une traverse est discontinue, cette traverse comportant un premier tronçon fixé au premier patin et un deuxième tronçon indépendant du premier tronçon fixé au deuxième patin.

Ces trains d'atterrissage permettent aux giravions de se poser sur de multiples types de surfaces.

Par ailleurs, un train d'atterrissage de giravion peut être principalement soumis à deux types de sollicitations lors de l'atterrissage : une sollicitation verticale liée à des moments et des efforts verticaux dirigés selon une direction verticale, et des sollicitations en roulis et en tangage liées à des moments et des efforts résultant des mouvements en roulis et en tangage du giravion.

Ces sollicitations notamment en roulis et en tangage peuvent être à l'origine du phénomène de résonance sol sur un giravion comportant un rotor de sustentation portant des pales articulées.

Pour limiter les risques d'apparition du phénomène de résonance sol, un constructeur peut rechercher à amortir les modes de vibration du fuselage posé sur son train d'atterrissage.

Par exemple, au moins un amortisseur est agencé directement entre une traverse et un fuselage.

Un tel amortisseur comprend par exemple une tige portant un piston et un corps. Le corps délimite alors un espace interne rempli par un fluide. De plus, le piston évolue dans l'espace interne. Dès lors, le piston partage l'espace interne en une chambre supérieure et une chambre inférieure.

En outre, pour produire un amortissement, le piston peut comprendre au moins un orifice de laminage. Chaque orifice de laminage traverse de part en part l'épaisseur du piston pour déboucher sur la chambre supérieure et la chambre inférieure. Ainsi, un orifice de laminage met en communication fluidique la chambre supérieure et la chambre inférieure.

Par suite, un déplacement de la traverse par rapport au fuselage induit un déplacement du piston dans l'espace interne du corps. Le fluide contenu dans une chambre traverse alors l'orifice de laminage pour atteindre l'autre chambre. Le laminage du fluide au travers de l'orifice de laminage produit classiquement un amortissement.

Lors d'un mode de fonctionnement en roulis, le fuselage de l'aéronef oscille au sol le long d'un axe de roulis par rapport au train d'atterrissage. Le piston se déplace par rapport au corps sur une faible amplitude et à une vitesse faible de l'ordre de quelques centimètres par seconde. Pour être efficace lors d'un tel mode de fonctionnement en roulis afin de limiter les risques d'apparition du phénomène de résonance sol, l'amortisseur est dimensionné pour exercer un effort résistant prédéterminé pour une telle amplitude et une telle vitesse de déplacement du piston par rapport au corps.

Néanmoins, lors d'un mode de fonctionnement à l'atterrissage, le fuselage se déplace alors sensiblement verticalement par rapport au train d'atterrissage. Le piston se déplace alors par rapport au corps à une vitesse élevée de l'ordre de quelques mètres par seconde. En raison de cette vitesse élevée, l'amortisseur risque d'exercer un effort résistant indûment important, en raison du dimensionnement de l'amortisseur nécessaire pour obtenir des résultats satisfaisants lors du mode de fonctionnement en roulis.

L'aéronef comporte alors des dispositifs de décharge pour limiter l'effort résistant de l'amortisseur lors du mode de fonctionnement à l'atterrissage.

Par exemple, le piston peut comprendre des orifices de décharge aptes à déboucher sur chacune des chambres. Toutefois, chaque orifice de décharge est obturé par un dispositif élastique de surpression. Au moins un dispositif élastique de surpression libère au moins un orifice de décharge associé lorsque l'effort résistant courant de l'amortisseur dépasse un seuil d'effort. L'ouverture d'au moins un orifice de décharge permet d'augmenter la surface de passage total du fluide au travers du piston pour écrêter l'effort résistant généré par l'amortisseur.

Ces dispositifs de décharge n'agissent que lorsque l'effort résistant dépasse un certain seuil. L'amortisseur a donc un comportement qui varie entre deux domaines de fonctionnement distincts, à savoir entre un premier domaine de fonctionnement lorsque l'effort résistant courant est inférieur au seuil précité et un deuxième domaine lorsque l'effort résistant courant est supérieur à ce seuil.

Par suite, le constructeur dimensionne l'amortisseur pour générer l'effort résistant maximal souhaité lors du mode de fonctionnement en roulis afin d'éviter l'apparition du phénomène de résonance sol. A l'inverse, le constructeur limite cet effort résistant maximal pour atteindre un effort résistant acceptable lors du mode de fonctionnement à l'atterrissage. Par conséquent, les performances de l'amortisseur sont réduites, l'effort résistant obtenu lors du mode de fonctionnement en roulis étant finalement inférieur à l'effort résistant maximal en raison de la limitation appliquée.

Les documents US 4519559, FR 2761745, US 3173632 et DE 11 04 833 sont connus. Le document FR 2761745 n'appartient pas au domaine technique des trains d'atterrissage et ne fournit aucune réponse au problème décrit précédemment. Ce document FR 2761745 est juste cité à titre informatif.

La présente invention a alors pour objet de proposer un train d'atterrissage à patins muni d'au moins une paire d'amortisseurs tendant à limiter les inconvénients résultant de la sollicitation des amortisseurs durant un mode de fonctionnement à l'atterrissage.

L'invention concerne donc un train d'atterrissage d'aéronef. Ce train d'atterrissage est muni d'un premier patin longitudinal d'appui et d'un deuxième patin longitudinal d'appui ainsi que d'une traverse transversale dite « traverse avant » et d'une traverse transversale dite « traverse arrière » aptes à relier chacune le premier patin et le deuxième patin à un fuselage de l'aéronef. Chaque traverse a une première branche reliée au premier patin ainsi qu'une deuxième branche reliée au deuxième patin, le premier patin et le deuxième patin étant situés transversalement de part et d'autre d'un plan antéropostérieur vertical de symétrie.

L'expression « chaque traverse a une première branche reliée au premier patin ainsi qu'une deuxième branche reliée au deuxième patin » signifie que le premier patin est relié au fuselage par la première branche de la première traverse et la première branche de la deuxième traverse, le deuxième patin étant relié au fuselage par la deuxième branche de la première traverse et la deuxième branche de la deuxième traverse.

Chaque traverse peut être une traverse continue s'étendant continûment du premier patin au deuxième patin, ou une traverse discontinue.

Le train d'atterrissage comporte en outre au moins une paire d'amortisseurs comprenant un premier amortisseur et un deuxième amortisseur disposés transversalement de part et d'autre du plan antéropostérieur, chaque amortisseur étant attaché à une traverse.

L'expression « chaque amortisseur étant attaché à une traverse » signifie que chaque amortisseur est attaché à la première traverse ou à la deuxième traverse. Différentes configurations sont décrites par la suite. Les amortisseurs d'une paire peuvent alors être agencés sur une même traverse ou sur deux traverses différentes.

Chaque amortisseur comprend un corps délimitant un espace interne et une tige portant un piston, cet espace interne étant au moins partagé en une chambre dite « chambre primaire » qui possède un volume interne qui diminue lorsque la tige s'enfonce dans le corps et en une chambre dite « chambre secondaire » remplies chacune par un fluide, chaque amortisseur comprenant au moins un orifice de laminage mettant en communication fluidique la chambre secondaire et la chambre primaire de cet amortisseur, chaque piston délimitant partiellement au moins une chambre pour déplacer ledit fluide.

Par ailleurs, la chambre primaire du premier amortisseur d'une paire est reliée à la chambre secondaire du deuxième amortisseur de ladite paire par une conduite dite « première conduite », la chambre secondaire du premier amortisseur de ladite paire étant reliée à la chambre primaire du deuxième amortisseur de ladite paire par une conduite dite « deuxième conduite ».

L'expression « conduite » fait référence à un conduit pouvant comporter au moins un tube.

L'expression « délimite partiellement au moins une chambre » signifie que le piston d'un amortisseur représente une paroi délimitant partiellement une chambre, et en particulier une paroi mobile.

Le train d'atterrissage comporte donc au moins une paire d'amortisseurs munie de deux amortisseurs. Ces deux amortisseurs sont disposés de part et d'autre du plan antéropostérieur, de manière symétrique par exemple. En outre, chaque amortisseur est relié au train d'atterrissage et au fuselage d'un aéronef muni de ce train d'atterrissage.

Par ailleurs, les chambres des deux amortisseurs d'une paire sont en communication fluidique. Ce couplage des deux amortisseurs induit un comportement innovant permettant de résoudre le problème de dimensionnement des amortisseurs.

Lors d'un mode de fonctionnement à l'atterrissage, les conduites tendent à neutraliser les orifices de laminage. Le fluide tend à circuler au travers des conduites et non pas au travers des orifices de laminage.

Lorsque le fuselage se rapproche du train d'atterrissage durant un mode de fonctionnement à l'atterrissage, la chambre primaire du premier amortisseur se vide et tend remplir la chambre secondaire du deuxième amortisseur en circulant dans la première conduite. De même, la chambre primaire du deuxième amortisseur se vide et tend à remplir la chambre secondaire du premier amortisseur.

Les flux de fluide circulant dans les conduites ne sont donc limités que par le diamètre de ces conduites. Ce diamètre étant important, l'effort résistant généré par les amortisseurs est faible.

Par contre, lors d'un mode de fonctionnement en roulis, les conduites couplant les deux amortisseurs n'empêchent pas le fluide hydraulique de traverser les orifices de laminage suite au déplacement relatif des pistons et des corps.

En effet, chaque conduite reliant les deux amortisseurs d'une paire d'amortisseurs ne transmet sensiblement aucun débit de fluide, étant donné que les chambres reliées à une même conduite se comportent de la même manière en raison de l'agencement des amortisseurs de part et d'autre du plan antéropostérieur.

Par exemple, la chambre primaire du premier amortisseur et la chambre secondaire du deuxième amortisseur reliées à la première conduite tendent à se vider. A l'inverse, la chambre primaire du deuxième amortisseur et la chambre secondaire du premier amortisseur reliées à la deuxième conduite tendent à se remplir.

Le fluide contenu dans les amortisseurs doit donc circuler alors au travers des orifices de laminage.

Un constructeur détermine par suite la section de passage des conduites pour minimiser l'effort résistant généré par les amortisseurs lors d'un mode de fonctionnement à l'atterrissage.

De manière indépendante, ce constructeur détermine la section de passage des orifices de laminage pour atteindre l'effort résistant nécessaire lors d'un mode de fonctionnement en roulis pour éviter l'apparition du phénomène de résonance sol.

Un tel dispositif permet donc de régler efficacement les amortisseurs pour éviter un phénomène de résonance sol.

Ce train d'atterrissage peut de plus comporter une ou plusieurs des caractéristiques additionnelles qui suivent.

Ainsi, des sections des chambres primaire et secondaire de chaque amortisseur sont favorablement identiques.

Le terme « section » fait référence à une coupe d'une chambre réalisée dans un plan horizontal perpendiculaire à un axe d'extension de la tige. Dès lors, toutes les sections des chambres sont par exemple identiques.

Pour obtenir cet effet, la tige de chaque amortisseur peut être une tige dite « traversante » qui traverse de part en part le piston pour s'étendre dans la chambre primaire et la chambre secondaire.

Cette caractéristique facilite le dimensionnement du système et optimise son fonctionnement. En effet, cette caractéristique permet le transport de quantités identiques de fluide dans les conduites.

En outre, chaque conduite débouchant sur une chambre au niveau d'une section de passage dite « section de conduite », chaque orifice de laminage débouchant sur une chambre au niveau d'une section de passage dite « section de laminage », chaque section de conduite peut présenter une aire supérieure à une aire de chaque section de laminage.

Dès lors, les orifices de laminage et les conduites sont optimisés pour remplir les fonctions décrites précédemment.

Chaque orifice de laminage n'agit que lors du mode de fonctionnement en roulis. L'ordre de grandeur de la vitesse de déplacement relatif de chaque piston par rapport au corps associé est par exemple de l'ordre de 1 à 2 cm/s. A titre illustratif, sur un amortisseur de 4 centimètres de diamètre, quatre orifices de laminage de forme cylindrique présentant un diamètre de 0.4 millimètre permettent de générer un effort résistant acceptable de l'ordre de 100 à 350 daN (DécaNewton), ce qui est suffisant pour amortir une oscillation en roulis du fuselage par rapport au train d'atterrissage.

Lors du mode de fonctionnement à l'atterrissage, l'ordre de grandeur de la vitesse de déplacement relatif de chaque piston par rapport au corps associé est par exemple de l'ordre de 0.5 à 1 mètre par seconde. A titre illustratif, sur un amortisseur de 4 centimètres de diamètre, des conduites présentant un diamètre d'un centimètre (10mm) permettent de limiter l'effort résistant de l'amortisseur à une valeur de l'ordre de 10 à 30 daN par exemple.

Le fonctionnement dissocié de chaque amortisseur en fonction du mode de fonctionnement tend à faciliter le dimensionnement de l'amortisseur.

Par ailleurs, au moins un amortisseur comporte un premier système de fixation qui fixe la tige de l'amortisseur à une traverse, et un deuxième système de fixation apte à fixer le corps de cet amortisseur audit fuselage.

De manière alternative, au moins un amortisseur comporte un premier moyen de fixation qui fixe le corps de l'amortisseur à une traverse, et un deuxième moyen de fixation apte à fixer la tige de cet amortisseur audit fuselage.

Par ailleurs, selon une première alternative, le premier amortisseur et le deuxième amortisseur d'une paire sont fixés à une même traverse.

Par exemple, le premier amortisseur et le deuxième amortisseur d'une paire sont respectivement fixés à la première branche et à la deuxième branche d'une même traverse.

Cet agencement tend à maximiser le déplacement relatif entre un piston et le corps associé.

Selon une deuxième alternative, le premier amortisseur d'une paire dite « paire donnée » est fixé à une traverse et le deuxième amortisseur de ladite paire donnée est fixé à l'autre traverse.

Cet agencement permet de conserver un agencement des amortisseurs d'une paire de part et d'autre d'un plan antéropostérieur du train d'atterrissage. De plus, cet agencement permet d'avoir une action supplémentaire sur l'oscillation du fuselage par rapport au train d'atterrissage en tangage.

Par exemple, le premier amortisseur est fixé à la première branche d'une traverse et le deuxième amortisseur est fixé à la deuxième branche de l'autre traverse.

Par ailleurs, la première conduite peut comporter un premier clapet anti-retour pour interdire le passage de fluide du deuxième amortisseur vers le premier amortisseur et autoriser le passage de fluide du premier amortisseur vers le deuxième amortisseur, la deuxième conduite comportant un deuxième clapet anti-retour pour interdire le passage de fluide du premier amortisseur vers le deuxième amortisseur et autoriser le passage de fluide du deuxième amortisseur vers le premier amortisseur.

En dehors de cas d'atterrissage extrêmes se produisant à haute vitesse, les traverses des trains à patins se déforment élastiquement.

Le retour élastique des traverses vers leur état initial suite au contact avec le sol se fait en restituant l'énergie emmagasinée. Ce retour élastique peut induire un rebond de l'aéronef qui peut être désagréable voire nocif.

Le premier clapet anti-retour et le deuxième clapet anti-retour tendent à limiter un tel rebond.

En effet et lors du mode de fonctionnement à l'atterrissage, lorsque la traverse se déforme élastiquement suite au contact du train d'atterrissage avec le sol, le premier clapet anti-retour et le deuxième clapet anti-retour s'ouvrent et permettent donc au fluide de se déplacer d'un amortisseur à l'autre amortisseur au travers des conduites.

Par contre, lors du retour élastique de la traverse vers son état initial avant atterrissage, le premier clapet anti-retour et le deuxième clapet anti-retour ferment les conduites. Le fluide circule alors au sein des orifices de laminage, ce qui tend à freiner efficacement le retour élastique, de la traverse vers son état initial et donc le rebond de l'aéronef.

Selon un autre aspect et selon une première variante, au moins une traverse est une traverse continue comprenant une portion centrale s'étendant entre la première branche et la deuxième branche.

Selon une deuxième variante, au moins une traverse est une traverse discontinue comprenant un espace vide entre la première branche et la deuxième branche de cette traverse.

Par ailleurs, selon une réalisation, le piston comprend au moins un dit orifice de laminage mettant en communication fluidique la chambre primaire et la chambre secondaire.

Par exemple, chaque orifice de laminage est un passage ménagé dans le piston.

Dès lors, le piston est interposé entre la chambre primaire et la chambre secondaire.

Selon un agencement, la chambre primaire représente une chambre supérieure et la chambre secondaire représente une chambre inférieure, la chambre supérieure étant agencée sensiblement à l'aplomb de la chambre inférieure.

Selon un agencement alternatif, la chambre primaire représente la chambre inférieure et la chambre secondaire représente la chambre supérieure.

En outre, le premier amortisseur et le deuxième amortisseur d'une paire sont par exemple identiques pour favoriser le couplage.

Outre un train d'atterrissage, l'invention concerne un aéronef muni d'un fuselage relié à un tel train d'atterrissage.

De plus, l'invention concerne aussi un procédé d'amortissement d'un train d'atterrissage d'aéronef, ledit train d'atterrissage étant muni d'un premier patin longitudinal d'appui et d'un deuxième patin longitudinal d'appui ainsi que d'une traverse transversale dite « traverse avant » et d'une traverse transversale dite « traverse arrière » aptes à relier chacune le premier patin et le deuxième patin à un fuselage dudit aéronef, chaque traverse ayant une première branche reliée au premier patin ainsi qu'une deuxième branche reliée au deuxième patin, le premier patin et le deuxième patin étant situés transversalement de part et d'autre d'un plan antéropostérieur vertical de symétrie, ledit train d'atterrissage comporte au moins une paire d'amortisseurs comprenant un premier amortisseur et un deuxième amortisseur disposés transversalement de part et d'autre dudit plan antéropostérieur, chaque amortisseur étant attaché à une traverse, chaque amortisseur comprenant un corps délimitant un espace interne et une tige portant un piston, ledit espace interne étant au moins partagé en une chambre dite « chambre primaire » qui possède un volume interne qui diminue lorsque ladite tige s'enfonce dans ledit corps et en une chambre dite « chambre secondaire » remplies chacune par un fluide, chaque amortisseur comprenant au moins un orifice de laminage mettant en communication fluidique la chambre secondaire et la chambre primaire, chaque piston délimitant partiellement au moins une chambre pour déplacer ledit fluide.

Selon ce procédé, on met en communication fluidique la chambre primaire du premier amortisseur d'une paire et la chambre secondaire du deuxième amortisseur de ladite paire par une conduite dite « première conduite », et on met en communication fluidique la chambre secondaire du premier amortisseur de ladite paire et la chambre primaire du deuxième amortisseur de ladite paire par une conduite dite « deuxième conduite ».

L'invention et ses avantages apparaîtront avec plus de détails dans le cadre de la description qui suit avec des exemples donnés à titre illustratif en référence aux figures annexées qui représentent :
- la figure 1, une vue d'un aéronef muni d'un train d'atterrissage selon l'invention,
- la figure 2, une vue d'un train d'atterrissage selon l'invention muni d'une paire d'amortisseurs agencés sur une traverse discontinue,
- la figure 3, une vue d'un train d'atterrissage selon l'invention muni d'une paire d'amortisseurs agencés sur une traverse continue, chaque amortisseur ayant un piston porté par une tige reliée à une traverse,

- la figure 4, une vue d'un train d'atterrissage selon l'invention muni d'une paire d'amortisseurs comprenant deux amortisseurs agencés respectivement sur deux traverses,
- la figure 5, une vue d'un train d'atterrissage selon l'invention muni d'une paire d'amortisseurs agencés sur une traverse continue, chaque amortisseur ayant un corps relié à une traverse,
- les figures 6 à 9, des vues explicitant le fonctionnement de l'invention,
- les figures 10 à 12, des vues présentant une paire d'amortisseurs comprenant des clapets anti-retour, et
- la figure 13, une vue d'un train d'atterrissage à quatre points de fixation selon l'invention muni d'une paire d'amortisseurs agencés sur une traverse continue.

Les éléments présents dans plusieurs figures distinctes sont affectés d'une seule et même référence.

On note que trois directions X, Y et Z orthogonales les unes par rapport aux autres sont représentées sur les figures.

La première direction X est dite longitudinale. Le terme « longitudinal » est relatif à toute direction sensiblement parallèle à la première direction X.

La deuxième direction Y est dite transversale. Le terme « transversal » est relatif à toute direction sensiblement parallèle à la deuxième direction Y.

Enfin, la troisième direction Z est dite en élévation. L'expression « en élévation » est relative à toute direction sensiblement parallèle à la troisième direction Z.

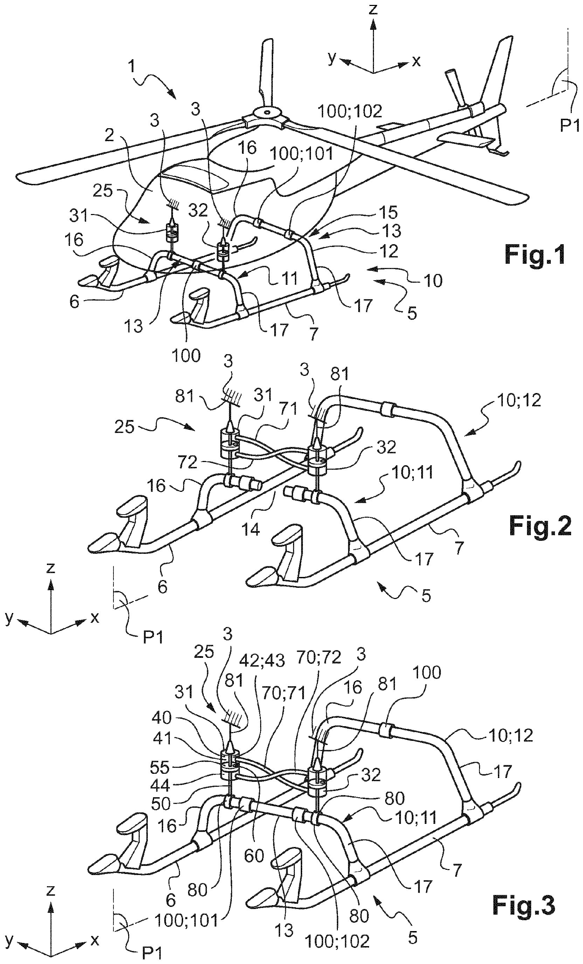

La figure 1 présente un aéronef 1, et plus particulièrement un giravion.

Cet aéronef 1 est muni d'un fuselage 2 qui s'étend longitudinalement le long d'un plan antéropostérieur P1 vertical de symétrie. De plus, le fuselage 2 est solidaire d'un train d'atterrissage 5 à patins. En particulier, le train d'atterrissage 5 est relié à des cadres 3 du fuselage 2 visibles sur les figures 2 à 5.

On note qu'une partie du fuselage 2 a été rendue transparente sur la figure 1 pour permettre la visualisation du train d'atterrissage 5.

Ce train d'atterrissage 5 comporte un premier patin 6 longitudinal d'appui et un deuxième patin 7 longitudinal d'appui disposés de part et d'autre du plan antéropostérieur P, éventuellement de manière symétrique.

Dès lors, le train d'atterrissage comprend deux traverses 10 transversales reliant chacune le premier patin 6 et le deuxième patin 7 au fuselage. En particulier, le train d'atterrissage 5 comporte une traverse avant 11 transversale et une traverse arrière 12 transversale.

Chaque traverse 10 est pourvue d'une première branche 16 qui est solidarisée au premier patin 6, et d'une deuxième branche 17 solidarisée au deuxième patin 7. La première branche 16 et la deuxième branche 17 d'une traverse sont disposées de part et d'autre du plan antéropostérieur P1, éventuellement de manière symétrique.

Les branches sont parfois dénommées « branches descendantes » dans la mesure où ces branches s'étendent de la portion centrale vers un patin en se rapprochant du sol. Les branches s'étendent en effet au moins en élévation d'un sommet vers un pied solidarisé à un patin. Chaque branche peut comporter un ou plusieurs tubes, voire au moins un manchon, ainsi qu'un moyen de connexion à un patin.

De plus, chaque traverse schématisée sur la figure 1 est continue. Une telle traverse continue comporte une portion centrale 13 sensiblement rectiligne qui est solidarisée à la première branche 16 et à la deuxième branche 17.

Toutefois et en référence à la figure 2, au moins une traverse peut être une traverse discontinue. Dès lors, un espace vide 14 sépare la première branche 16 de la deuxième branche 17 au niveau du plan antéropostérieur P1.

Indépendamment de la nature des traverses et en référence à la figure 1, le train d'atterrissage 5 est alors relié à une structure porteuse de l'aéronef par ses traverses.

Chaque traverse est ainsi par exemple fixée à un cadre de l'aéronef par au moins un système de fixation 100.

Sur un train d'atterrissage à trois points de fixation du type représenté sur la figure 1, une traverse est fixée par deux systèmes de fixation 101, 102 à un cadre, et l'autre traverse est fixée par au moins un système de fixation 100 à un autre cadre.

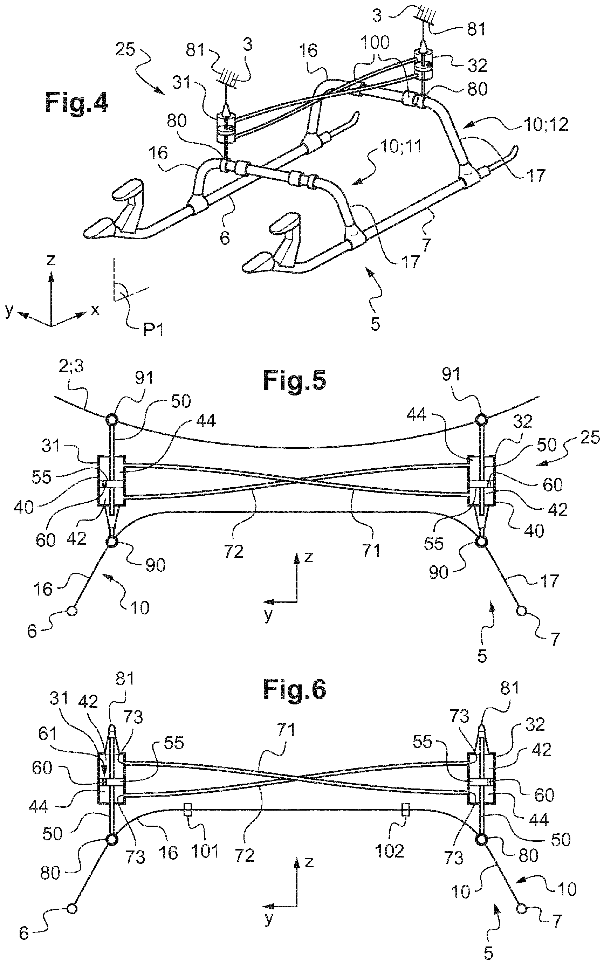

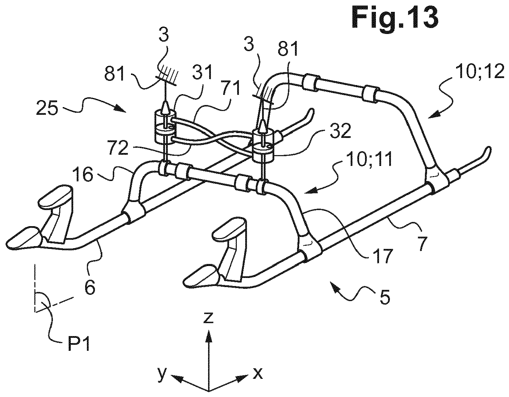

Toutefois, le train d'atterrissage peut comporter quatre points de fixation. Les figures 4 et 13 illustrent de tels trains d'atterrissage.

Selon l'invention et en référence à la figure 3, ce train d'atterrissage 5 est muni d'un dispositif d'amortissement 20

Ce dispositif d'amortissement 20 comprend au moins une paire 25 d'amortisseurs. La figure 3 présente une unique paire d'amortisseurs. Toutefois, le train d'atterrissage peut comporter une pluralité de paires, et par exemple une paire d'amortisseurs agencée sur chaque traverse.

Sur un train d'atterrissage muni de trois points de fixation, au moins une paire d'amortisseur peut être agencée sur une traverse comprenant un unique point de fixation.

Chaque paire 25 d'amortisseurs comporte un premier amortisseur 31 et un deuxième amortisseur 32. Le premier amortisseur 31 et le deuxième amortisseur 32 sont disposés de part et d'autre du plan antéropostérieur P1, éventuellement de manière symétrique. Le premier amortisseur 31 et le deuxième amortisseur 32 sont éventuellement identiques.

Le premier amortisseur 31 et le deuxième amortisseur 32 d'une paire sont chacun interposés entre une traverse et le fuselage de l'aéronef.

Ainsi, le premier amortisseur 31 et le deuxième amortisseur 32 sont chacun fixés à une traverse, à savoir à une traverse continue ou discontinue en fonction de la variante.

Selon la première alternative de la figure 3, le premier amortisseur 31 d'une paire 25 est fixé à la première branche 16 d'une traverse. Le deuxième amortisseur 32 de cette paire 25 est alors fixé à la deuxième branche 17 de cette même traverse.

Toutefois et selon la deuxième alternative de la figure 4, le premier amortisseur 31 d'une paire 25 est fixé à une traverse, et le deuxième amortisseur 32 de cette paire est fixé à l'autre traverse.

Par exemple, le premier amortisseur 31 est fixé à la première branche 16 d'une traverse, à savoir la traverse avant sur la figure 4. Le deuxième amortisseur 32 est alors fixé à la deuxième branche 17 de l'autre traverse, à savoir la traverse arrière.

Par ailleurs et en référence à la figure 3, chaque amortisseur 31, 32 d'une paire comporte un corps 40 qui délimite un espace interne 41. De plus, cet amortisseur 31, 32 comprend une tige 50 qui porte un piston 55 logé dans l'espace interne 41. Le piston 55 et le corps 40 peuvent effectuer un mouvement de translation relatif l'un par rapport à l'autre. Ainsi, le piston 55 coulisse dans l'espace interne 41, ou le corps 40 coulisse le long du piston 55.

La tige 50 peut être une tige traversante à savoir une tige qui traverse le piston de part en part pour atteindre un guide du corps. Cette caractéristique permet d'obtenir des chambres présentant des sections identiques, chaque section représentant une coupe de l'amortisseur perpendiculaire à un axe de la tige et parallèle à une face du piston.

Selon une première réalisation illustrée notamment sur la figure 3, au moins un amortisseur 31, 32 comporte un premier système de fixation 80 qui fixe la tige 50 de l'amortisseur 31, 32 à une traverse 10. Dès lors, un deuxième système de fixation 81 fixe le corps 40 de cet amortisseur 31, 32 audit fuselage 2.

Par exemple le premier système de fixation et/ou le deuxième système de fixation comprennent au moins une articulation, voire une articulation à rotule.

Selon une deuxième réalisation illustrée notamment sur la figure 5, au moins un amortisseur 31, 32 comporte un premier moyen de fixation 90 qui fixe le corps 40 de l'amortisseur 31, 32 à une traverse 10. De plus, un deuxième moyen de fixation 91 fixe la tige 50 de cet amortisseur 31, 32 au fuselage 2.

Par exemple le premier moyen de fixation et/ou le deuxième moyen de fixation comprennent au moins une articulation, voire une articulation à rotule.

Par ailleurs et en référence à la figure 6, l'espace interne 41 de chaque amortisseur est au moins partagé en une chambre dite « chambre primaire 42 » et en une chambre dite « chambre secondaire 44 ». La chambre primaire et la chambre secondaire sont remplies par un fluide, tel que de l'huile ou un gaz par exemple.

La chambre primaire 42 d'un amortisseur possède un volume interne 43 qui diminue lorsque la tige 50 s'enfonce dans le corps 40, à savoir lorsque l'amortisseur se rétracte. Une telle rétraction revient à diminuer la longueur de l'amortisseur, séparant en élévation deux extrémités de cet amortisseur. A l'inverse, le volume interne 43 de la chambre primaire augmente lorsque la tige 50 tend à sortir du corps 40, à savoir lorsque l'amortisseur s'étend.

De plus, chaque amortisseur comprend au moins un orifice de laminage 60 qui met en communication fluidique la chambre secondaire 44 et la chambre primaire 42.

Dès lors, le piston 60 d'un amortisseur délimite partiellement au moins une chambre pour déplacer le fluide au sein de l'amortisseur, éventuellement d'une chambre vers l'autre chambre au travers d'au moins un orifice de laminage 60.

Par exemple, le piston 55 comprend au moins un orifice de laminage 60 mettant en communication fluidique la chambre primaire 42 et la chambre secondaire 44 de l'amortisseur. Cet orifice de laminage traverse de part en part le piston.

En outre, le piston 55 est interposé entre la chambre primaire 42 et la chambre secondaire 44. Ce piston 55 délimite alors partiellement la chambre secondaire et la chambre primaire.

Dès lors, une chambre d'un amortisseur est une chambre supérieure située à l'aplomb de l'autre chambre qui représente une chambre inférieure. Selon la réalisation de la figure 6, la chambre primaire d'un amortisseur est une chambre supérieure, la chambre secondaire de cet amortisseur étant une chambre inférieure. Selon la réalisation de la figure 5, la chambre primaire d'un amortisseur est une chambre inférieure, la chambre secondaire de cet amortisseur étant une chambre supérieure.

Par ailleurs et indépendamment de la réalisation, la chambre primaire 42 du premier amortisseur 31 d'une paire est reliée de manière fluidique à la chambre secondaire 44 du deuxième amortisseur 32 de cette paire par une conduite 70 dite « première conduite 71 ». De même, la chambre secondaire 44 du premier amortisseur 31 est reliée de manière fluidique à la chambre primaire 42 du deuxième amortisseur 32 par une conduite 70 dite « deuxième conduite 72 ».

Chaque chambre du premier amortisseur est alors en communication fluidique avec une chambre du deuxième amortisseur par une conduite.

En outre, chaque conduite 70 débouche sur une chambre au niveau d'une section de passage dite « section de conduite 73 ». Or, chaque orifice de laminage 60 débouche sur une chambre au niveau d'une section de passage dite « section de laminage 61 ». Dès lors, chaque section de conduite 73 peut présenter une aire dite « aire de conduite » supérieure à une aire dite « aire de section » de chaque section de laminage 61.

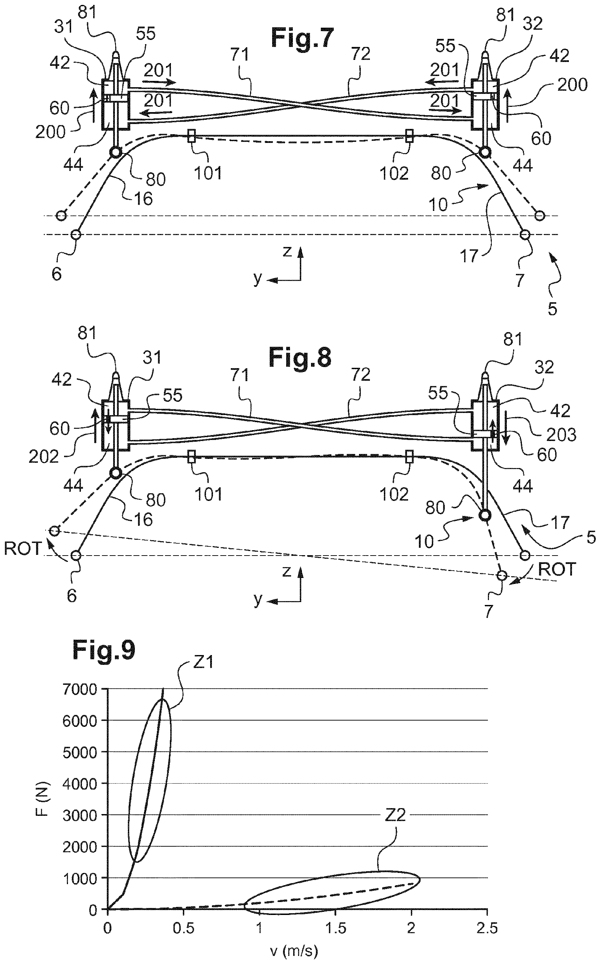

Les figures 7 à 10 illustrent le fonctionnement d'un train d'atterrissage selon l'invention. Cette illustration est basée sur la réalisation de la figure 6. Toutefois, les diverses réalisations décrites dans les figures 2 à 5 fonctionnent d'une manière similaire.

En référence à la figure 7, durant un mode de fonctionnement à l'atterrissage, les pistons du premier amortisseur 31 et du deuxième amortisseur 32 d'une paire effectuent des mouvements relatifs par rapport au corps associé qui sont illustrés par les flèches 200. Ces mouvements sont de même nature.

Selon la figure 7, lorsque le fuselage descend vers le train d'atterrissage, les pistons tendent à réduire le volume de la chambre primaire de chaque amortisseur lors d'une rétraction de l'amortisseur. Dès lors, le fluide contenu dans une chambre primaire d'un amortisseur tend à être évacué vers la chambre secondaire de l'autre amortisseur selon les flèches 201. La circulation de fluide au sein des orifices de laminage est faible voire nulle.

A l'inverse et en référence à la figure 8, durant un mode de fonctionnement en roulis, les pistons du premier amortisseur 31 et du deuxième amortisseur 32 d'une paire effectuent des mouvements relatifs par rapport au corps associé qui sont illustrés par les flèches 202 et 203 et qui sont de nature différentes.

Selon la figure 8, un mouvement de roulis ROT induit la rétraction du premier amortisseur 31 et l'extension du deuxième amortisseur 32. Le piston du premier amortisseur 31 tend à expulser le fluide contenu dans la chambre primaire du premier amortisseur dans la première conduite. Par contre, le piston du deuxième amortisseur 32 tend à expulser le fluide contenu dans la chambre secondaire du deuxième amortisseur dans la première conduite. Par suite, ces actions contraires tendent à empêcher la circulation du fluide au sein des conduites 70. Dès lors, le fluide circule au sein des amortisseurs 31, 32 au travers des orifices de laminage.

La figure 9 montre un graphique présentant en abscisse une vitesse de déplacement V relative du piston d'un amortisseur par rapport au corps associé en mètres par seconde, et en ordonnée l'effort résistant F généré par l'amortisseur en Newtons.

Les conduites 70 mises en place permettent de dissocier le mode fonctionnement en roulis et à l'atterrissage de chaque amortisseur. La zone Z1 démontre que l'invention permet d'obtenir un amortisseur fournissant un effort résistant important pour une faible vitesse de déplacement lors du mode de fonctionnement en roulis. En effet, les pistons d'une paire d'amortisseurs se déplacent dans des sens antagonistes et obligent donc le fluide à passer à travers les orifices de laminages.

A l'inverse, la zone Z2 démontre que l'invention permet d'obtenir un amortisseur fournissant un effort résistant faible pour une forte vitesse de déplacement lors du mode de fonctionnement à l'atterrissage. En effet, les pistons d'une paire d'amortisseurs se déplacent dans des sens identiques et permettent alors au fluide de circuler dans les conduites.

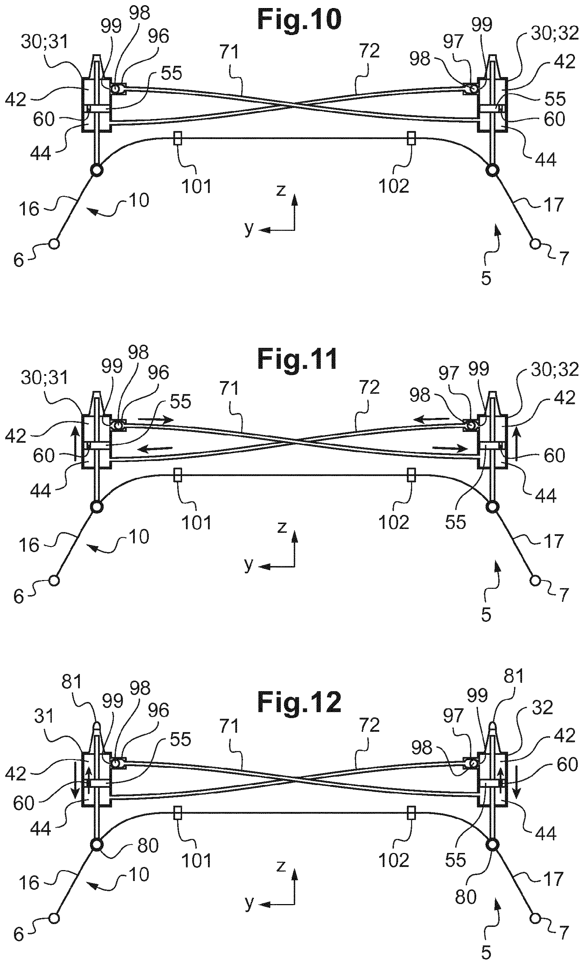

Par ailleurs et en référence à la figure 10, le train d'atterrissage 5 comporte un dispositif pour tendre à limiter le rebond de l'aéronef durant un atterrissage.

En effet, la première conduite 71 comporte un premier clapet anti-retour 96 pour interdire le passage de fluide du deuxième amortisseur 32 vers le premier amortisseur 31 et autoriser le passage de fluide du premier amortisseur 31 vers le deuxième amortisseur 32. Par exemple, ce premier clapet anti-retour 96 débouche sur la chambre primaire 42 du premier amortisseur 31.

De même, la deuxième conduite 72 comporte un deuxième clapet anti-retour 97 pour interdire le passage de fluide du premier amortisseur 31 vers le deuxième amortisseur 32 et autoriser le passage de fluide du deuxième amortisseur 32 vers le premier amortisseur 31. Par exemple, ce deuxième clapet anti-retour 97 débouche sur la chambre primaire 42 du deuxième amortisseur 32.

Chaque clapet anti-retour peut comporter une bille 98 et un siège perforé 99, la bille 98 pouvant obturer une perforation dudit siège dans une position fermée et n'obturant pas ladite perforation dans une position ouverte.

En référence à la figure 11, lorsque le fuselage se rapproche du train d'atterrissage durant le mode de fonctionnement à l'atterrissage, les clapets anti-retour s'ouvrent et permettent donc au fluide présent dans une chambre primaire d'un amortisseur d'une paire d'aller dans la chambre secondaire de l'autre amortisseur de cette paire d'amortisseurs.

Par contre et en référence à la figure 12, lorsque le fuselage tend à rebondir, les clapets anti-retour se ferment. Le fluide passe alors par les orifices de laminage, ce qui freine efficacement le rebond de l'aéronef.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, un train d'atterrissage peut comprendre au moins deux paires d'amortisseurs. Selon une réalisation, un amortisseur de chaque paire peut être relié à une première branche d'une traverse, l'autre amortisseur étant relié à une deuxième branche.

Une même traverse peut aussi comprendre une pluralité de paires d'amortisseurs. De même, chaque traverse peut comprendre au moins une paire d'amortisseurs.

En outre, les figures 1, 2, 3 et 13 présentent une paire d'amortisseurs qui sont agencés sur une traverse avant. Toutefois, les amortisseurs d'une paire peuvent être agencés sur un traverse arrière.

## Revendications

1. Train d'atterrissage (5) d'aéronef (1), ledit train d'atterrissage (5) étant muni d'un premier patin (6) longitudinal d'appui et d'un deuxième patin (7) longitudinal d'appui ainsi que d'une traverse (10) transversale dite «traverse avant (11) » et d'une traverse (10) transversale dite « traverse arrière (12) » aptes à relier chacune le premier patin (6) et le deuxième patin (7) à un fuselage (2) dudit aéronef (1), chaque traverse (10) ayant une première branche (16) reliée au premier patin (6) ainsi qu'une deuxième branche (17) reliée au deuxième patin (7), le premier patin (6) et le deuxième patin (7) étant situés transversalement de part et d'autre d'un plan antéropostérieur (P1) vertical de symétrie, ledit train d'atterrissage (5) comporte au moins une paire (25) d'amortisseurs (31, 32) comprenant un premier amortisseur (31) et un deuxième amortisseur (32) disposés transversalement de part et d'autre dudit plan antéropostérieur (P1), chaque amortisseur (31, 32) étant attaché à une traverse (10), chaque amortisseur (31, 32) comprenant un corps (40) délimitant un espace interne (41) et une tige (50) portant un piston (55), ledit espace interne (41) étant au moins partagé en une chambre dite « chambre primaire (42) » qui possède un volume interne (43) qui diminue lorsque ladite tige (50) s'enfonce dans ledit corps (40) et en une chambre dite « chambre secondaire (44) » remplies chacune par un fluide, chaque amortisseur comprenant au moins un orifice de laminage (60) mettant en communication fluidique la chambre secondaire (44) et la chambre primaire (42), chaque piston délimitant partiellement au moins une chambre pour déplacer ledit fluide,
**caractérisé en ce que** la chambre primaire (42) du premier amortisseur (31) d'une paire est reliée à la chambre secondaire (44) du deuxième amortisseur (32) de ladite paire (25) par une conduite (70) dite « première conduite (71) », la chambre secondaire (44) du premier amortisseur (31) de ladite paire (25) étant reliée à la chambre primaire (42) du deuxième amortisseur (32) de ladite paire (25) par une conduite (70) dite « deuxième conduite (72) ».

2. Train d'atterrissage selon la revendication 1,
**caractérisé en ce que** chaque conduite (70) débouchant sur une chambre au niveau d'une section de passage dite « section de conduite (73) », chaque orifice de laminage (60) débouchant sur une chambre au niveau d'une section de passage dite « section de laminage (61) », chaque section de conduite (73) présente une aire supérieure à une aire de chaque section de laminage (61).

3. Train d'atterrissage selon l'une quelconque des revendications 1 à 2,
**caractérisé en ce qu'**au moins un amortisseur (31, 32) comporte un premier système de fixation (80) qui fixe la tige (50) de l'amortisseur (31, 32) à une traverse (10), et un deuxième système de fixation (81) apte à fixer le corps (40) de cet amortisseur (31, 32) audit fuselage (2).

4. Train d'atterrissage selon l'une quelconque des revendications 1 à 3,
**caractérisé en ce qu'**au moins un amortisseur (31, 32) comporte un premier moyen de fixation (90) qui fixe le corps (40) de l'amortisseur (31, 32) à une traverse (10), et un deuxième moyen de fixation (91) apte à fixer la tige (50) de cet amortisseur (31, 32) audit fuselage (2).

5. Train d'atterrissage selon l'une quelconque des revendications 1 à 4,
**caractérisé en ce que** le premier amortisseur (31) et le deuxième amortisseur (32) d'une paire sont fixés à une même traverse (10).

6. Train d'atterrissage selon la revendication 5,
**caractérisé en ce que** le premier amortisseur (31) et le deuxième amortisseur (32) d'une paire (25) sont respectivement fixés à la première branche (16) et à la deuxième branche (17) d'une même traverse.

7. Train d'atterrissage selon l'une quelconque des revendications 1 à 4,
**caractérisé en ce que** le premier amortisseur (31) d'une paire (25) dite « paire donnée » est fixé à une traverse (10) et le deuxième amortisseur (32) de ladite paire donnée est fixé à l'autre traverse (10).

8. Train d'atterrissage selon la revendication 7,
**caractérisé en ce que** le premier amortisseur (31) est fixé à la première branche (16) d'une traverse (10) et le deuxième amortisseur (32) est fixé à la deuxième branche (17) de l'autre traverse (10).

9. Train d'atterrissage selon l'une quelconque des revendications 1 à 8,
**caractérisé en ce que** la première conduite (71) comporte un premier clapet anti-retour (96) pour interdire le passage de fluide du deuxième amortisseur (32) vers le premier amortisseur (31) et autoriser le passage de fluide du premier amortisseur (31) vers le deuxième amortisseur (32), la deuxième conduite (72) comportant un deuxième clapet anti-retour (97) pour interdire le passage de fluide du premier amortisseur (31) vers le deuxième amortisseur (32) et autoriser le passage de fluide du deuxième amortisseur (32) vers le premier amortisseur (31).

10. Train d'atterrissage selon l'une quelconque des revendications 1 à 9,
**caractérisé en ce qu'**au moins une traverse (10) est une traverse continue comprenant une portion centrale (13) s'étendant entre la première branche (16) et la deuxième branche (17).

11. Train d'atterrissage selon l'une quelconque des revendications 1 à 10,
**caractérisé en ce qu'**au moins une traverse (10) est une traverse discontinue comprenant un espace vide (14) entre la première branche (16) et la deuxième branche (17) de cette traverse (10).

12. Train d'atterrissage selon l'une quelconque des revendications 1 à 11,
**caractérisé en ce que** ledit piston (55) comprend au moins un dit orifice de laminage (60) mettant en communication fluidique la chambre primaire (42) et la chambre secondaire (44).

13. Train d'atterrissage selon l'une quelconque des revendications 1 à 12,
**caractérisé en ce que** ledit piston (55) est interposé entre la chambre primaire (42) et la chambre secondaire (44).

14. Train d'atterrissage selon l'une quelconque des revendications 1 à 13,
**caractérisé en ce que** le premier amortisseur et le deuxième amortisseur d'une paire sont identiques.

15. Aéronef (1) muni d'un fuselage (2) relié à un train d'atterrissage (5),
**caractérisé en ce que** ledit train d'atterrissage (5) est selon l'une quelconque des revendications 1 à 13.

16. Procédé d'amortissement d'un train d'atterrissage (5) d'aéronef (1), ledit train d'atterrissage (5) étant muni d'un premier patin (6) longitudinal d'appui et d'un deuxième patin (7) longitudinal d'appui ainsi que d'une traverse (10) transversale dite « traverse avant (11) » et d'une traverse (10) transversale dite « traverse arrière (12) » aptes à relier chacune le premier patin (6) et le deuxième patin (7) à un fuselage (2) dudit aéronef (1), chaque traverse (10) ayant une première branche (16) reliée au premier patin (6) ainsi qu'une deuxième branche (17) reliée au deuxième patin (7), le premier patin (6) et le deuxième patin (7) étant situés transversalement de part et d'autre d'un plan antéropostérieur (P1) vertical de symétrie, ledit train d'atterrissage (5) comporte au moins une paire (25) d'amortisseurs (31, 32) comprenant un premier amortisseur (31) et un deuxième amortisseur (32) disposés transversalement de part et d'autre dudit plan antéropostérieur (P1), chaque amortisseur (31, 32) étant attaché à une traverse (10), chaque amortisseur (31, 32) comprenant un corps (40) délimitant un espace interne (41) et une tige (50) portant un piston (55), ledit espace interne (41) étant au moins partagé en une chambre dite « chambre primaire » qui possède un volume interne qui diminue lorsque ladite tige s'enfonce dans ledit corps et en une chambre dite « chambre secondaire » remplies chacune par un fluide, chaque amortisseur comprenant au moins un orifice de laminage (60) mettant en communication fluidique la chambre secondaire (44) et la chambre primaire, chaque piston délimitant partiellement au moins une chambre pour déplacer ledit fluide, **caractérisé en ce que** l'on met en communication fluidique la chambre primaire (42) du premier amortisseur (31) d'une paire (25) et la chambre secondaire (44) du deuxième amortisseur (32) de ladite paire (25) par une conduite (70) dite « première conduite (71) », et on met en communication fluidique la chambre secondaire (44) du premier amortisseur (31) de ladite paire (25) et la chambre primaire (42) du deuxième amortisseur (32) de ladite paire par une conduite (70) dite « deuxième conduite (72) ».

## Patentansprüche

1. Landegestell (5) eines Luftfahrzeugs (1), wobei das Landegestell (5) mit einer ersten Längsauflagerkufe (6) und einer zweiten Längsauflagerkufe (7) sowie mit einer "vordere Querstrebe (11)" genannten Querstrebe (10) und einer "hintere Querstrebe (12)" genannten Querstrebe (10), wobei jede die erste Kufe (6) und die zweite Kufe (7) mit einem Rumpf (2) des Luftfahrzeugs (1) verbinden kann, versehen ist, wobei jede Querstrebe (10) einen ersten Arm (16) aufweist, der mit der ersten Kufe (6) verbunden ist, sowie einen zweiten Arm (17), der mit der zweiten Kufe (7) verbunden ist, wobei die erste Kufe (6) und die zweite Kufe (7) quer zu beiden Seiten einer senkrechten anteroposterioren Symmetrieebene (P1) angeordnet sind, wobei das Landegestell (5) mindestens ein Paar (25) Stoßdämpfer (31, 32) aufweist, die einen ersten Stoßdämpfer (31) und einen zweiten Stoßdämpfer (32) umfassen, die quer zu beiden Seiten der anteroposterioren Ebene (P1) angeordnet sind, wobei jeder Stoßdämpfer (31, 32) an einer Querstrebe (10) befestigt ist, wobei jeder Stoßdämpfer (31, 32) einen Körper (40) aufweist, der einen Innenraum (41) begrenzt und eine Stange (50), die einen Kolben (55) trägt, wobei der Innenraum (41) mindestens in eine "primäre Kammer (42)" genannte Kammer, die ein Innenvolumen (43) aufweist, das abnimmt, wenn die Stange (50) in den Körper (40) eindringt, und eine "sekundäre Kammer (44)" genannte Kammer unterteilt ist, die jeweils mit einem Fluid gefüllt sind, wobei jeder Stoßdämpfer mindestens eine Drosselöffnung (60) aufweist, die eine fluidische Verbindung zwischen der sekundären Kammer (44) und der primären Kammer (42) herstellt, wobei jeder Kolben mindestens teilweise eine Kammer begrenzt, um das Fluid zu bewegen,
**dadurch gekennzeichnet, dass** die primäre Kammer (42) des ersten Stoßdämpfers (31) eines Paares mit der sekundären Kammer (44) des zweiten Stoßdämpfers (32) des Paares (25) über eine "erste Leitung (71)" genannte Leitung (70) verbunden ist, wobei die sekundäre Kammer (44) des ersten Stoßdämpfers (31) des Paares (25) mit der primären Kammer (42) des zweiten Stoßdämpfers (32) des Paares (25) über eine "zweite Leitung (72)" genannte Leitung (70) verbunden ist.

2. Landegestell nach Anspruch 1,
**dadurch gekennzeichnet, dass** jede Leitung (70) in einer Kammer auf der Höhe eines Durchgangsabschnitts, genannt "Leitungsabschnitt (73)", mündet, wobei jede Drosselöffnung (60) in einer Kammer auf der Höhe eines Durchgangsabschnitts, genannt "Drosselabschnitt (61)", mündet, wobei jeder Leitungsabschnitt (73) einen Flächeninhalt aufweist, der größer ist als ein Flächeninhalt eines jeden Drosselabschnitts (61).

3. Landegestell nach einem der Ansprüche 1 bis 2,
**dadurch gekennzeichnet, dass** mindestens ein Stoßdämpfer (31, 32) ein erstes Befestigungssystem (80) aufweist, das die Stange (50) des Stoßdämpfers (31, 32) an einer Querstrebe (10) befestigt, und ein zweites Befestigungssystem (81), das den Körper (40) dieses Stoßdämpfers (31, 32) an dem Rumpf (2) befestigt.

4. Landegestell nach einem der Ansprüche 1 bis 3,
**dadurch gekennzeichnet, dass** mindestens ein Stoßdämpfer (31, 32) ein erstes Befestigungsmittel (90) aufweist, das den Körper (40) des Stoßdämpfers (31, 32) an einer Querstrebe (10) befestigt, und ein zweites Befestigungsmittel (91), das die Stange (50) dieses Stoßdämpfers (31, 32) an dem Rumpf (2) befestigt.

5. Landegestell nach einem der Ansprüche 1 bis 4,
**dadurch gekennzeichnet, dass** der erste Stoßdämpfer (31) und der zweite Stoßdämpfer (32) eines Paares an derselben Querstrebe (10) befestigt sind.

6. Landegestell nach Anspruch 5,
**dadurch gekennzeichnet, dass** der erste Stoßdämpfer (31) und der zweite Stoßdämpfer (32) eines Paares (25) jeweils an dem ersten Arm (16) und an dem zweiten Arm (17) derselben Querstrebe befestigt sind.

7. Landegestell nach einem der Ansprüche 1 bis 4,
**dadurch gekennzeichnet, dass** der erste Stoßdämpfer (31) eines Paares (25), genannt "vorgegebenes Paar", an einer Querstrebe (10) befestigt ist, und der zweite Stoßdämpfer (32) dieses vorgegebenen Paares an der anderen Querstrebe (10) befestigt ist.

8. Landegestell nach Anspruch 7,
**dadurch gekennzeichnet, dass** der erste Stoßdämpfer (31) an dem ersten Arm (16) einer Querstrebe (10) befestigt ist, und der zweite Stoßdämpfer (32) an dem zweiten Arm (17) der anderen Querstrebe (10) befestigt ist.

9. Landegestell nach einem der Ansprüche 1 bis 8,
**dadurch gekennzeichnet, dass** die erste Leitung (71) eine erste Rückschlagklappe (96) aufweist, um den Übergang des Fluids des zweiten Stoßdämpfers (32) zu dem ersten Stoßdämpfer (31) zu unterbinden, und den Übergang des Fluids des ersten Stoßdämpfers (31) zu dem zweiten Stoßdämpfer (32) zu erlauben, wobei die zweite Leitung (72) eine zweite Rückschlagklappe (97) aufweist, um den Übergang des Fluids des ersten Stoßdämpfers (31) zu dem zweiten Stoßdämpfer (32) zu unterbinden, und den Übergang des Fluids des zweiten Stoßdämpfers (32) zu dem ersten Stoßdämpfer (31) zu erlauben.

10. Landegestell nach einem der Ansprüche 1 bis 9,
**dadurch gekennzeichnet, dass** mindestens eine Querstrebe (10) eine durchgehende Querstrebe ist mit einem mittleren Abschnitt (13), der sich zwischen dem ersten Arm (16) und dem zweiten Arm (17) erstreckt.

11. Landegestell nach einem der Ansprüche 1 bis 10,
**dadurch gekennzeichnet, dass** mindestens eine Querstrebe (10) eine unterbrochene Querstrebe ist mit einem Leerraum (14) zwischen dem ersten Arm (16) und dem zweiten Arm (17) dieser Querstrebe (10).

12. Landegestell nach einem der Ansprüche 1 bis 11,
**dadurch gekennzeichnet, dass** der Kolben (55) mindestens eine Drosselöffnung (60) genannte Öffnung aufweist, die die primäre Kammer (42) mit der sekundären Kammer (44) fluidisch verbindet.

13. Landegestell nach einem der Ansprüche 1 bis 12,
**dadurch gekennzeichnet, dass** der Kolben (55) zwischen der primären Kammer (42) und der sekundären Kammer (44) angeordnet ist.

14. Landegestell nach einem der Ansprüche 1 bis 13,
**dadurch gekennzeichnet, dass** der erste Stoßdämpfer und der zweite Stoßdämpfer eines Paares identisch sind.

15. Luftfahrzeug (1) mit einem Rumpf (2), der mit einem Landegestell (5) verbunden ist,
**dadurch gekennzeichnet, dass** das Landegestell (5) ein Landegestell gemäß einem der Ansprüche 1 bis 13 ist.

16. Verfahren zur Stoßdämpfung eines Landegestells (5) eines Luftfahrzeugs (1), wobei das Landegestell (5) mit einer ersten Längsauflagerkufe (6) und einer zweiten Längsauflagerkufe (7) sowie mit einer "vordere Querstrebe (11)" genannten Querstrebe (10) und einer "hintere Querstrebe (12)" genannten Querstrebe (10), wobei jede die erste Kufe (6) und die zweite Kufe (7) mit einem Rumpf (2) des Luftfahrzeugs (1) verbinden kann, versehen ist, wobei jede Querstrebe (10) einen ersten Arm (16) aufweist, der mit der ersten Kufe (6) verbunden ist, sowie einen zweiten Arm (17), der mit der zweiten Kufe (7) verbunden ist, wobei die erste Kufe (6) und die zweite Kufe (7) quer zu beiden Seiten einer senkrechten anteroposterioren Symmetrieebene (P1) angeordnet sind, wobei das Landegestell (5) mindestens ein Paar (25) Stoßdämpfer (31, 32) aufweist, die einen ersten Stoßdämpfer (31) und einen zweiten Stoßdämpfer (32) umfassen, die quer zu beiden Seiten der anteroposterioren Ebene (P1) angeordnet sind, wobei jeder Stoßdämpfer (31, 32) an einer Querstrebe (10) befestigt ist, wobei jeder Stoßdämpfer (31, 32) einen Körper (40) aufweist, der einen Innenraum (41) begrenzt und eine Stange (50), die einen Kolben (55) trägt, wobei der Innenraum (41) mindestens in eine "primäre Kammer" genannte Kammer, die ein Innenvolumen aufweist, das abnimmt, wenn die Stange in den Körper eindringt, und eine "sekundäre Kammer" genannte Kammer unterteilt ist, die jeweils mit einem Fluid gefüllt sind, wobei jeder Stoßdämpfer mindestens eine Drosselöffnung (60) aufweist, die eine fluidische Verbindung zwischen der sekundären Kammer (44) und der primären Kammer (42) herstellt, wobei jeder Kolben mindestens teilweise eine Kammer begrenzt, um das Fluid zu bewegen,
**dadurch gekennzeichnet, dass** die primäre Kammer (42) des ersten Stoßdämpfers (31) eines Paares (25) mit der sekundären Kammer (44) des zweiten Stoßdämpfers (32) des Paares (25) über eine "erste Leitung (71)" genannte Leitung (70) fluidisch verbunden ist, und die sekundäre Kammer (44) des ersten Stoßdämpfers (31) des Paares (25) mit der primären Kammer (42) des zweiten Stoßdämpfers (32) des Paares über eine "zweite Leitung (72)" genannte Leitung (70) fluidisch verbunden ist.

## Claims

1. A landing gear (5) of an aircraft (1), said landing gear (5) being provided with a first longitudinal supporting skid (6) and a second longitudinal supporting skid (7), and also with a transverse cross-member (10) referred to as "front cross-member (11)" and a transverse cross-member (10) referred to as "rear cross-member (12)" which are each suitable for connecting the first skid (6) and the second skid (7) to a fuselage (2) of said aircraft (1), each cross-member (10) having a first branch (16) connected to the first skid (6) and also a second branch (17) connected to the second skid (7), the first skid (6) and the second skid (7) being located transversely on either side of a vertical anteroposterior plane (P1) of symmetry, said landing gear (5) comprises at least one pair (25) of shock absorbers (31, 32), comprising a first shock absorber (31) and a second shock absorber (32) which are arranged transversely on either side of said anteroposterior plane (P1), each shock absorber (31, 32) being attached to a cross-member (10), each shock absorber (31, 32) comprising a body (40) delimiting an inner space (41) and a rod (50) bearing a piston (55), said inner space (41) being at least divided into a chamber referred to as "primary chamber (42)" which has an internal volume (43) which decreases when said rod (50) is pushed into said body (40) and into a chamber referred to as "secondary chamber (44)" which are each filled by a fluid, each shock absorber comprising at least one restricting orifice (60) fluidically connecting the secondary chamber (44) and the primary chamber (42), each piston partially delimiting at least one chamber for displacing said fluid,
**characterised in that** the primary chamber (42) of the first shock absorber (31) of a pair is connected to the secondary chamber (44) of the second shock absorber (32) of said pair (25) by a tube (70) referred to as "first tube (71)", the secondary chamber (44) of the first shock absorber (31) of said pair (25) being connected to the primary chamber (42) of the second shock absorber (32) of said pair (25) by a tube (70) referred to as "second tube (72)".

2. A landing gear according to Claim 1,
**characterised in that**, each tube (70) opening into a chamber at the level of a section of passage referred to as "tube section (73)", each restricting orifice (60) opening into a chamber at the level of a section of passage referred to as "restricting section (61)", each tube section (73) has an area greater than an area of each restricting section (61).

3. A landing gear according to any one of Claims 1 to 2,
**characterised in that** at least one shock absorber (31, 32) comprises a first fixing system (80) which fixes the rod (50) of the shock absorber (31, 32) to a cross-member (10), and a second fixing system (81) suitable for fixing the body (40) of this shock absorber (31, 32) to said fuselage (2).

4. A landing gear according to any one of Claims 1 to 3,
**characterised in that** at least one shock absorber (31, 32) comprises a first fixing means (90) which fixes the body (40) of the shock absorber (31, 32) to a cross-member (10), and a second fixing means (91) suitable for fixing the rod (50) of this shock absorber (31, 32) to said fuselage (2).

5. A landing gear according to any one of Claims 1 to 4,
**characterised in that** the first shock absorber (31) and the second shock absorber (32) of a pair are fixed to one and the same cross-member (10).

6. A landing gear according to Claim 5,
**characterised in that** the first shock absorber (31) and the second shock absorber (32) of a pair (25) are fixed to the first branch (16) and to the second branch (17) respectively of one and the same cross-member.

7. A landing gear according to any one of Claims 1 to 4,
**characterised in that** the first shock absorber (31) of a pair (25) referred to as "given pair" is fixed to a cross-member (10) and the second shock absorber (32) of said given pair is fixed to the other cross-member (10).

8. A landing gear according to Claim 7,
**characterised in that** the first shock absorber (31) is fixed to the first branch (16) of a cross-member (10) and the second shock absorber (32) is fixed to the second branch (17) of the other cross-member (10).

9. A landing gear according to any one of Claims 1 to 8,
**characterised in that** the first tube (71) comprises a first non-return valve (96) to prevent fluid from passing from the second shock absorber (32) towards the first shock absorber (31) and to allow fluid to pass from the first shock absorber (31) towards the second shock absorber (32), the second tube (72) comprising a second non-return valve (97) to prevent fluid from passing from the first shock absorber (31) towards the second shock absorber (32) and to allow fluid to pass from the second shock absorber (32) towards the first shock absorber (31).

10. A landing gear according to any one of Claims 1 to 9,
**characterised in that** at least one cross-member (10) is a continuous cross-member comprising a central portion (13) extending between the first branch (16) and the second branch (17).

11. A landing gear according to any one of Claims 1 to 10,
**characterised in that** at least one cross-member (10) is a discontinuous cross-member comprising an empty space (14) between the first branch (16) and the second branch (17) of this cross-member (10).

12. A landing gear according to any one of Claims 1 to 11,
**characterised in that** said piston (55) comprises at least one said restricting orifice (60) fluidically connecting the primary chamber (42) and the secondary chamber (44).

13. A landing gear according to any one of Claims 1 to 12,
**characterised in that** said piston (55) is interposed between the primary chamber (42) and the secondary chamber (44).

14. A landing gear according to any one of Claims 1 to 13,
**characterised in that** the first shock absorber and the second shock absorber of a pair are identical.

15. An aircraft (1) provided with a fuselage (2) connected to a landing gear (5), **characterised in that** said landing gear (5) is in accordance with any one of Claims 1 to 13.

16. A method for damping a landing gear (5) of an aircraft (1), said landing gear (5) being provided with a first longitudinal supporting skid (6) and a second longitudinal supporting skid (7), and also with a transverse cross-member (10) referred to as "front cross-member (11)" and a transverse cross-member (10) referred to as "rear cross-member (12)" which are each suitable for connecting the first skid (6) and the second skid (7) to a fuselage (2) of said aircraft (1), each cross-member (10) having a first branch (16) connected to the first skid (6) and also a second branch (17) connected to the second skid (7), the first skid (6) and the second skid (7) being located transversely on either side of a vertical anteroposterior plane (P1) of symmetry, said landing gear (5) comprises at least one pair (25) of shock absorbers (31, 32), comprising a first shock absorber (31) and a second shock absorber (32) which are arranged transversely on either side of said anteroposterior plane (P1), each shock absorber (31, 32) being attached to a cross-member (10), each shock absorber (31, 32) comprising a body (40) delimiting an inner space (41) and a rod (50) bearing a piston (55), said inner space (41) being at least divided into a chamber referred to as "primary chamber" which has an internal volume which decreases when said rod is pushed into said body and into a chamber referred to as "secondary chamber" which are each filled by a fluid, each shock absorber comprising at least one restricting orifice (60) fluidically connecting the secondary chamber (44) and the primary chamber, each piston partially delimiting at least one chamber for displacing said fluid,
**characterised in that** the primary chamber (42) of the first shock absorber (31) of a pair (25) and the secondary chamber (44) of the second shock absorber (32) of said pair (25) are fluidically connected by a tube (70) referred to as "first tube (71)", and the secondary chamber (44) of the first shock absorber (31) of said pair (25) and the primary chamber (42) of the second shock absorber (32) of said pair are fluidically connected by a tube (70) referred to as "second tube (72)".
